# EUROPEAN PATENT APPLICATION

(11) **EP 2 434 267 A1**
(43) Date of publication of application: **28.03.2012**
(21) Application number: 10010930.5
(22) Date of filing: 27.09.2010
(51) Int. Cl.: G01K 3/04, G01K 7/16

(54) **Thermal history sensing**

(71) Applicant: Stichting voor de Technische Wetenschappen, 3527 JP Utrecht (NL); Technische Universiteit Twente, 7522 NB Enschede (NL)
(72) Inventor: Faber, Erik Jouwert, 7522 EH Enschede (NL); Wolters, Rubertus Adrianus Maria, 5644 LA Eindhoven (NL); Schmitz, Juriaan, 7555 HT Hengelo (NL)
(74) Representative: Visscher, Erik Henk

(57) **Abstract**

A history sensor is described. The sensor comprises a support substrate comprising a group IV semiconductor; at least one thin-film metal structure connected to at least a first and second contact pad, at least part of said first metal structure being in contact with said group IV semiconductor, wherein said metal is selected such that it reacts with said group IV semiconductor to a metal-compound semiconductor region when exposing said sensor to temperatures around or above a predetermined reaction temperature associated with the formation of said metal-compound semiconductor and wherein the electrical response of said exposed sensor provides information on at least a first part of said thermal exposure.

## Description

### Field of the invention

The invention generally relates to thermal history sensing and, in particular, though not necessarily, to a thermal history sensor and a sensor module using such sensor.

### Background of the invention

Components in many devices and systems, e.g. turbines, bearings, furnaces, boilers, solar panels, semiconductor chips, etc., are constantly exposed to varying temperature levels. When the temperature rises above a critical level degradation and ultimately component failure may occur. Therefore, in order to prevent destructive failure of the whole device or system and to enable timely replacement of a temperature-degraded component, typically a thermal history monitoring system is used in order to monitor whether a component has been exposed to temperatures above a certain critical value and, preferably, whether a component has been exposed to a certain temperature for a certain period in time.

One type of thermal history monitoring system is based on a microcontroller configured to continuously or periodically read a thermocouple or a temperature resistor. For example US7,014,368 describe a sensor system for continuously monitoring a bearing. Such system requires a power source and active monitoring electronics, thereby making the monitoring system sensitive to noise, drift and the harsh environment of the machinery. Moreover, the design of such monitoring sensor is not a practical and cost-effective solution for thermal history monitoring at many locations in a device.

Another type of thermal history monitoring system is based on sensors wherein a material parameter, e.g. optical and/or electrical parameter, may change irreversibly when exposed to a certain temperature. On the basis of the change in the material parameter, replacement of the component may be decided. For example, US5,975,758 describes a thermal history sensor for use in furnaces and boilers, wherein the resistance of the sensor changes due to thermal diffusion of a metal into an insulating layer. As this scheme is based on the melting process of a metal, it only works at relatively high temperatures and does not render controllable and accurate scheme for thermal exposure monitoring.

Similarly, US5,201,583 describes a thermal history sensing method based on irreversible changes in the magnetic properties of a steel piece. This method however allows limited monitoring functionality and only works at relatively high temperatures. Moreover, certain magnetic materials, such as Fe, are not or at least less suitable for use in CMOS processes. Hence, there is a need in the art for improved thermal history sensing schemes. In particular, there is a need for improved thermal history sensors, including thermal fingerprint arrays using such devices, which are simple to fabricate and which allow thermal history sensing over a wide temperature range.

### Summary of the invention

It is an object of the invention to reduce or eliminate at least one of the drawbacks in the prior art. In one aspect, the invention may relate to a thermal history sensor comprising a support substrate comprising a group IV semiconductor; at least first metal structure connected to at least a first and second contact pad, at least part of said first metal structure being in contact with said group IV semiconductor, wherein said metal is selected such that it reacts with said group IV semiconductor to a metal-compound semiconductor region when exposing said sensor to temperatures around or above a predetermined reaction temperature associated with the formation of said metal-compound semiconductor and wherein a first electrical response of said exposed first metal structure provides information on at least a first part of said thermal exposure. Hence, by selecting a predetermined silicide-forming metal, the thermal history sensor may be configured to capture and store information regarding exposure to temperatures within a certain range. Due to the irreversibility of the silicide-formation, the thermal exposure information is stored and may be accessed via the electrical response of the sensor.

In one embodiment, the sensor may further comprise: at least a second metal structure connected to at least a second pair of contact pads, at least part of said second metal structures being in contact with said group IV semiconductor, wherein said second metal is selected such that it reacts with said group IV semiconductor to a metal-compound semiconductor region when exposing said sensor to temperatures around or above a second predetermined temperature and wherein a second electrical response of said second metal structure provides information on at least a second part of said thermal exposure of said sensor. By selecting different metal-compound forming metals different temperature ranges may be monitored using one sensor. This way a thermal history sensor may be implemented which is capable of both sensing relatively low and high temperature exposures.

In one embodiment said first metal structure may comprise at least one metal selected from the noble, near-noble, rare earth metals, the refractory metals or alloys therefrom. In another embodiment said first metal structure may comprise at least one thin-film layer, preferably said thin-film metal layer having a thickness between 10 and 500 nm, preferably between 10 and 200 nm. In yet another embodiment, said group IV semiconductor may comprise diamond, silicon or germanium and/or compounds thereof. In a further embodiment, said group IV semiconductor is disposed in at least one thin-film semiconductor layer over said support substrate, preferably said thin-film semiconductor layer having a thickness between 20 and 500 nm, more preferably between 50 and 250 nm. The sensor may be based on many different metal-compounds, so that the sensor implementation may be easily adapted to the application. Moreover, the sensor structures are based on a low-temperature semiconducting processing scheme, which is compatible with standard CMOS processes or solar cell fabrication processes and which allows integration of the sensor structure onto a CMOS chip or a solar cell.

In one variant at least one insulating layer may be disposed between said thin-film semiconductor layer and said support layer, preferably the thickness of said group IV semiconductor thin-film layer being smaller than the thickness of said first metal structure. An insulating layer, typically an oxide layer, may be used to confine the formation of the metal-semiconductor compound to a certain area. This way, the metal-semiconductor compound region, i.e. the sensing region, can be more precisely controlled.

In one embodiment, said first metal structure may comprise one or more continuous thin-film metal conductors electrically connecting said first and second contact pad and wherein an electrical response measured between said first and second pad changes when said device is exposed to a temperature around or above a predetermined reaction temperature associated with the formation of said metal-compound semiconductor. In another embodiment said first metal structure comprises at least a first thin-film metal conductor connected to said first contact pad and at least a second thin-film metal conductor connected to said second contact pad, said first and second conductor being separated by a gap structure and wherein the dimensions of said gap structure being selected such that the an electrical response measured between said first and second pad changes when said device is exposed to a temperature around or above a predetermined reaction temperature associated with the formation of said metal-compound semiconductor. According to the desired implementation different layouts of the metal structure may be selected. A sensor comprising a gap structure provides for example initially a relatively high resistance value.

In further variants the electrical response of the sensor is based on the resistive response and/or a capacitive response.

In yet a further variant, the sensor may comprise a thin-film passivation layer, preferably a silicon oxide passivation layer, covering at least areas of said support substrate which are not covered by said metal structure. The sensor may be fabricated using mask layers comprising an siliconoxide, a siliconnitride or an oxinitride layer, which after finalization of the sensor structure may be used as a passivation layer for areas of the support substrate which are not covered by the metallic sensor structure.

In other variants said support substrate may be part of an integrated circuit, a solar panel, a display or an imaging sensor.

In another aspect the invention may relate to a sensor module for monitoring the thermal exposure of an object comprising a thermal history sensor according to any of claims 1-11, wherein said module comprises a protective housing and a thermal mount for establishing a thermal contact between said object and said sensor. In one embodiment said housing may be configured to be removably connected to said object.

The invention will be further illustrated with reference to the attached drawing, which schematically show embodiments according to the invention. It will be understood that the invention is not in any way restricted to these specific embodiments.

### Brief description of the drawings

**Fig. 1** schematic of a thermal history sensor according to one embodiment of the invention.
**Fig. 2** depicts the resistance-temperature relation of a metal-semiconductor compound forming system according to an embodiment of the invention.
**Fig. 3** depicts the response of a sensor according to one embodiment of the invention when exposed to varying temperatures.
**Fig. 4** depicts a thermal history sensor according to another embodiment of the invention.
**Fig. 5** depicts a sensor according to a further embodiment of the invention.
**Fig. 6** illustrates a sensor according to a yet further embodiment of the invention.
**Fig. 7** depicts the resistance as a function of time of a sensor according to one embodiment of the invention.
**Fig. 8** depicts the confined siliciation process in a sensor according to one embodiment of the invention.
**Fig. 9** depicts a schematic of a process for manufacturing a sensor or a sensor array according to one embodiment of the invention.**Fig. 10** depicts a sensor module according to one embodiment of the invention.

### Detailed description

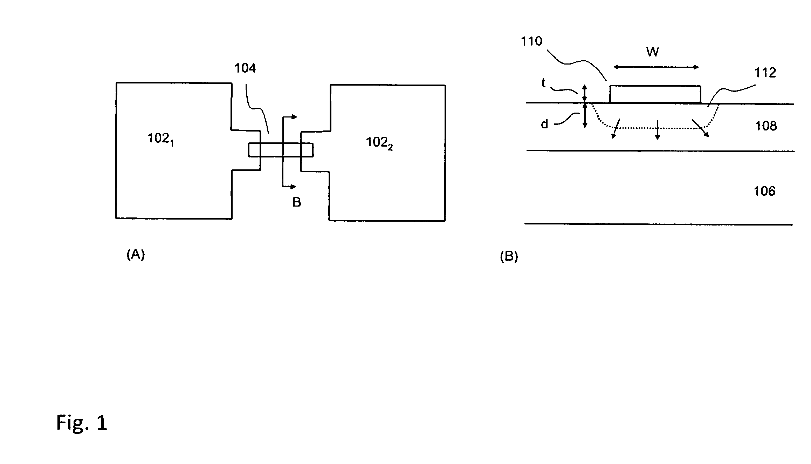

**FIG. 1** depicts a schematic of top view and a cross-section of a thermal history sensor according to one embodiment of the invention. In this particular embodiment, the thermal history sensor may comprise a support substrate **106** comprising a group IV elemental or a group IV compound semiconductor layer **108** having at least one area in contact with a thin-film metal structure **104.**

In one embodiment, the support layer may comprise a group IV semiconductor thin-film layer may comprise diamond, silicon or germanium and compounds and/or alloys thereof such as SiC, SiGe, etc. Typical thicknesses of the thin-film semiconductor layer vary between 50 nm and 5 µm. The semiconductor layer may have an amorphous, poly-, micro- or nano-crystalline structure or a monocrystalline structure deposited on a suitable support substrate using deposition techniques well known in the art, including physical or chemical deposition techniques (e.g. low pressure chemical vapour deposition (LPCVD)), sputtering, evaporation, molecular beam epitaxy (MBE), etc.).

Support substrates may include a silicon substrate or any other substrate suitable for supporting and growing or depositing a group IV semiconductor layer thereon, including glass substrates and polymer substrates as used in solar cell and display technology. Alternatively, instead of a thin-film layer a bulk-group IV-semiconductor substrate may be used.

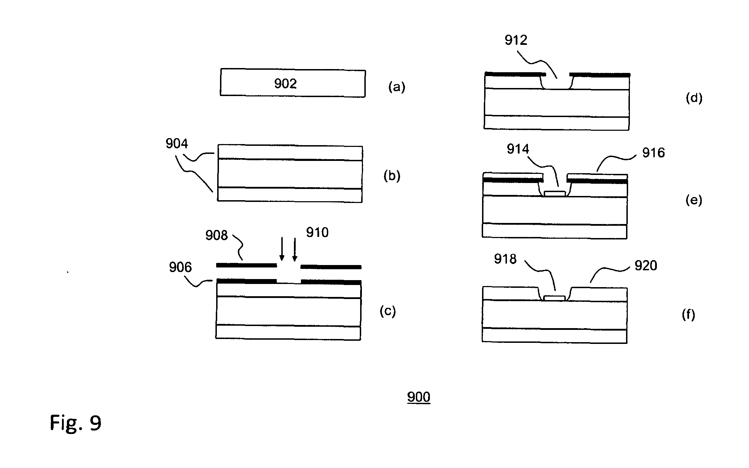

The metal of the thin-film metal structure may be selected such that it forms a metal-semiconductor compound with the group IV semiconductor. Such metals may include the transition metals which are known to form stable metal-semiconductor compounds with silicon, germanium and diamond and compounds thereof. Further metals include near-noble and rare earth metals. Such metals may react with the group IV semiconductor above a predefined reaction temperature. For example, when exposed to a certain reaction temperature, the silicidation temperature, silicon may react with metals such as Pt, Pd, W, Ni, Ti and Co to form a metal-silicide. In a similar way, germanium and diamond may react with transition metals to form a metal-germanide and a metal-carbide respectively. The thin-film metal structure may be fabricated using a lift-off technique in combination with sputter deposition. Details about the fabrication process are provided below with reference to **Fig. 9****.**

In the example of **Fig. 1****,** the layout of the metal structure regards a continuous thin-film line with a certain width W and thickness t. Typically the width and length of the line may range between 2 and 100 µm and its thickness between 10 and 500 nm depending on the application and the sensor layout. Before, during and after thermal exposure the electrical characteristics (e.g. resistance and/or capacitance) of the thin-film metal line may be accessed via contact electrodes **102₁,102₂** (e.g. contact pads for bonding) connected to the line.

When the metal structure is exposed to a temperature above a predetermined reaction temperature Ts, the metal may start a chemical reaction with the group IV semiconductor layer thereby forming one or more conducting metal-semiconductor compounds in the vicinity of the metal-semiconductor interface. Typically the formation of the metal-semiconductor compound, e.g. a metal-silicide, is isotropically so that the front of the silicide region **112** in the silicon layer travels in all directions at the same speed. During the formation of the silicide, the thickness t of the metal layer **104** will decrease at the expense of the formation of a metal-semiconductor compound region **112** of thickness d just underneath the metal layer.

Depending on the type of silicide formed the resistance of the metal-semiconductor compound layer will be either higher or lower than the thin-film metal structure. Typical resistivity values will be discussed hereunder in more detail. The rate at which the chemical reaction takes place is temperature dependent. Hence, when exposed for a certain period to a certain temperature, the resistance of the metal-semiconductor compound forming thin-film structure will increase with a predetermined value, wherein the resistance increase or decrease is a function of temperature and thermal exposure time. As will be shown hereunder in more detail, metal-semiconductor compound forming thin-film structures as depicted in **Fig. 1** may be used for thermal history sensing.

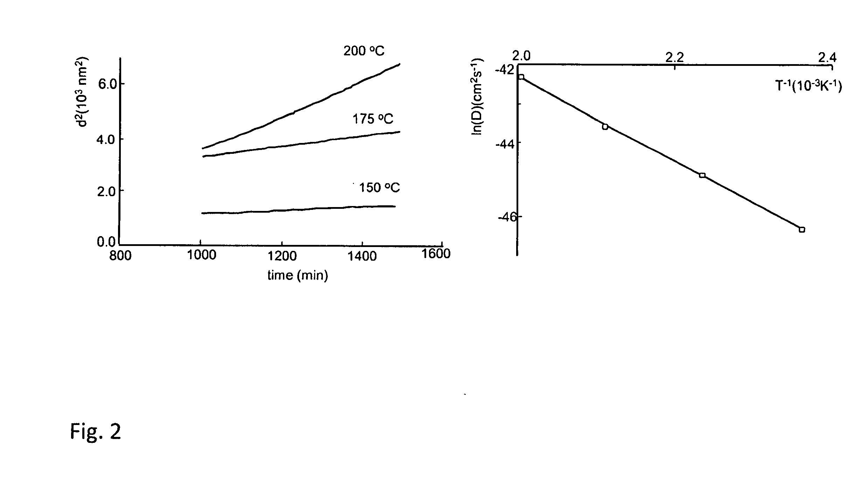

**Fig. 2** depicts the resistance-temperature relation of a semiconductor compound forming system according to an embodiment of the invention. In particular, **Fig. 2** depicts the resistance-temperature relation of a silicidation process between a Pd thin-film metal and a bulk silicon substrate. In this example a 156 nm Pd thin-film is selected as a silicide-forming metal so that above its silicidation temperature (approximately 100 °C) formation of Pd2Si start. Typically the growth of the Pd2Si region (of thickness d) is diffusion limited, so that the square of the thickness d versus time renders a linear dependence as shown in **Fig. 2****.** Linear dependencies are measured using a moderately doped polysilicon substrate for three different temperatures (150,175 and 200°C). As shown in **Fig. 2** already at relatively low temperatures, ie. temperatures well below 200 °C, silicde formation takes place.

It is submitted that the formation of some silicides may be governed by nucleation controlled kinetics instead of diffusion. In that case the time dependency may deviate from the linear dependence as mentioned above. However, also in such cases the change in response to a change in the resistivity of the metal-silicide structure may be used to monitor the thermal exposure.

From these measured data the diffusivity D may be derived and plotted in an Arrhenius curve (ln(D) versus the reciprocal temperatures). The derived activation energy was found to be 1.0 ± 0.1 eV, which is in close agreement with values from literature. Hence, the formation of a metal-semiconductor compound by exposing a metal-semiconducting thin-film structure to a certain temperature exhibits a very stable and reproducible resistance-temperature dependence thereby making such metal-semiconducting thin-film structure an excellent sensor for monitoring the exposure of the sensor to certain temperatures thereby effectively function as a thermal dosimeter.

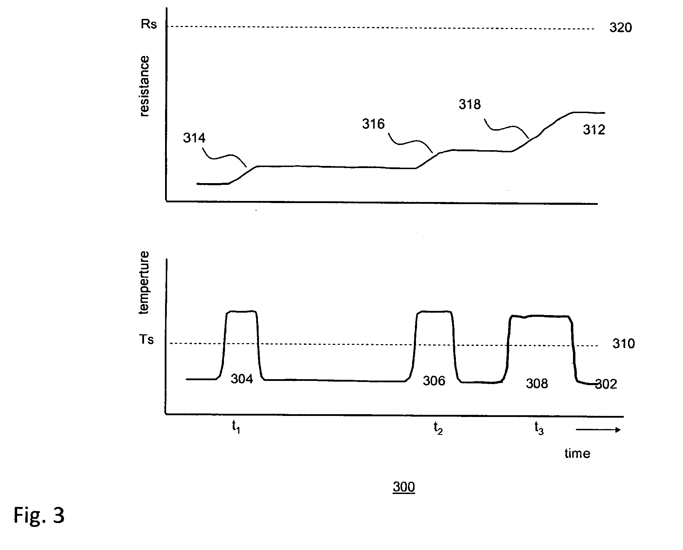

**Fig. 3** depicts the response of a sensor according to one embodiment of the invention when exposed to varying temperatures. The sensor may have a similar layout as described with reference to **Fig. 1** and for example thermally mounted to a machine having e.g. a stationary working temperature of 60°C. During periods of heavy loads however, the temperature may rise to temperatures up to 120 °C. **Fig. 3** depicts three of such thermal events **304,306,308** at times t1,t2 and t3 wherein the length of such events may be different. During such events, the temperature increase may inflict thermal stress onto parts in the machine and if these thermal events occur many times over a period of time, the thermal stress eventually may cause damage. Hence, in order to prevent machine breakdown due to thermal stress, it may be important to obtain information on the (average) number of such thermal events within a period of time.

By selecting for this particular configuration a silicide-forming metal such as Pd having a silicidation temperature of around 100 °C, no or at least very little silicidation will take place during stationary use at 60°C. During the thermal events however, the temperature will exceed the silicidation temperature Ts, so that silicidation takes place thereby irreversibly increasing the resistance of the sensor with a certain predetermined value **314,316,318.**

During maintenance or periodical checks of the machine, the resistance of a thermally exposed sensor may be read-out and compared with its initial resistance value before exposure and a predetermined resistance value Rs **320** associated with the situation where the whole silicide-forming metal has been transformed into a silicide. Depending on measured resistance, an operator may decide to replace certain machine parts and replace the exposed sensor with a new sensor.

Hence, by selecting a predetermined silicide-forming metal, the thermal history sensor may be configured to capture and store information regarding exposure to temperatures within a certain range. Due to the irreversibility of the silicide-formation, the thermal exposure information is stored and may be accessed via the resistance of the sensor.

The thickness of the thin-film silicide-forming metal may be selected depending on the particular sensor configuration and application. Typical thicknesses will lie within a range between 10 and 500 nm, preferably between 10 and 200 nm. If the thin-film metal is too thin, there may not be enough material for monitoring temperature exposures over longer periods of time.

Many metals react with silicon into a stable metal-silicide thereby allowing thermal history sensing over a broad range of temperatures. In some cases it is known that several stable metal-silicide phases may exist. Typically, in such metal-silicon systems a first stable silicide phase may be formed above a certain predetermined silicide-forming temperature. Then, when further increasing the temperature, the first phase of the silicide may be converted into a second phase silicide wherein the second phase silicide has a different resistivity when compared with the first phase silicide. For example, at 200 °C Pt will react with silicon into Pt2Si and when further increasing the temperature the Pt2Si may react with silicon into PtSi.

One group of silicide-forming metals is the transition metal group, which may be roughly divided in two classes of silicide-forming metals, i.e. 1) the near-noble and rare earth metals which react at relatively low temperatures, i.e. approx. between 100 and 400 °C, with silicon to form a metal-rich silcide; and, 2) the refractory metals which react at a higher temperature, i.e. approx. between 400 and 800 °C, to form a silicon-rich silicide.

Table 1 provides a non-limiting list of silicides (the first phase) and their experimentally determined silicidation temperatures showing that a sensor may be easily optimized by selecting on or more silicide-forming metals in a desired temperature range.

**Table 1: silicides and associated silicidation temperatures.**

| silicide | Ts (°C) | silicide | Ts (°C) |
|---|---|---|---|
| Pd2Si | 100 | IrSi | 400 |
| Pt2Si | 200 | FeSi | 450 |
| Ni2Si | 200 | TiSi2 | 500 |
| Cu3Si | 250 | MoSi2 | 525 |
| Co2Si | 350 | HfSi2 | 550 |
| YSi | 350 | VSi2 | 600 |
| RhSi | 350 | NbSi2 | 650 |
| MnSi | 400 | TaSi2 | 650 |
| ErSi | 400 | WSi2 | 650 |
| TbSi | 400 | ZrSi2 | 700 |

The silicidation temperature may be further modified by using alloys of transition metals. For example, a PtCr alloy may react with a silicon layer in order to form a CrSi2/PtSi silicide system. Hence, by selecting the appropriate silicide-forming metal or metals in such thermal history sensor, information regarding the thermal exposure may be obtained.

Selection of the group IV semiconducting layer may depend on the type of application. For example, silicon may be selected for low-cost applications and its compatibility with the CMOS processes. In one embodiment for example, a silicide-forming structure may be fabricated directly onto a silicon substrate or wafer comprising CMOS circuitry. Furthermore, CMOS compatibility also allows the sensor to be provided with on-chip active and passive elements, e.g. resistors, capacitors, switches or more complex IC logic blocks. In other applications, the sensor may be optimized for good thermal contact with another object. In that case, SiC or diamond substrates may be selected for improved thermal conductivity.

A sensor according to the invention may comprise several metals each forming a metal-semiconductor compound with the semiconducting layer when exposed to a predetermined temperature. By using more than one metal, more detailed thermal exposure information may be obtained.

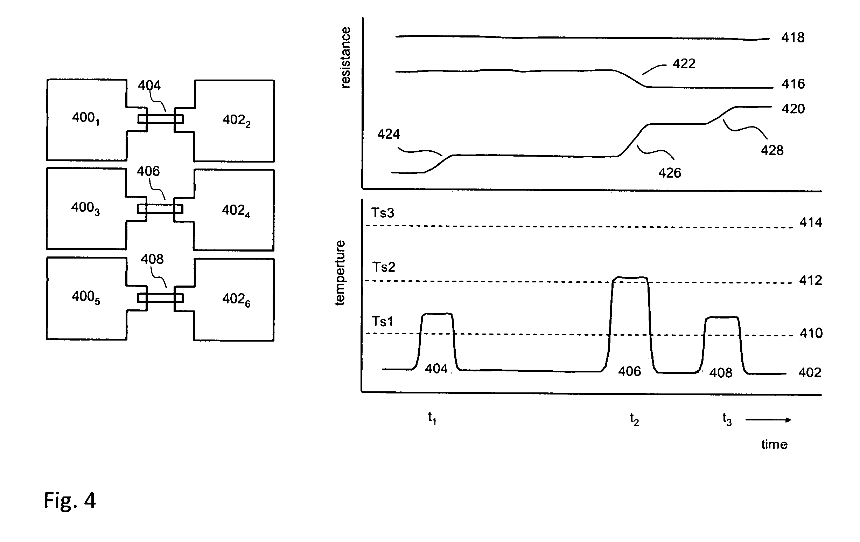

**Fig. 4** depicts a thermal history sensor according to another embodiment of the invention. In particular, **Fig. 4** depicts a a sensor comprising an array (a plurality, e.g. two or more) sensors structures as described with reference to **Fig. 1-3****.** Each sensor may comprise contact pads connected to a metal-semiconductor compound forming metal structure, wherein each metal is associated with a certain metal-compound formation temperature of said metal-compound semiconductor such that the array is able to sense thermal exposure over a broad range of temperatures.

For example, the sensor may comprise a first silicide-metal structure **404** comprising a thin-film Pd line connected to a first pair of contact pads, a second silicide-metal structure **406** comprising a Pt line connected to a second pair of contact pads and third silicide-metal structure **408** comprising a Co line connected to a third pair of contact pads. These different lines may be used to monitor different temperature ranges, i.e. the response of the Pd line may be used to monitor temperature exposures between approx. 100 and 250 °C, the Pt line may be used to monitor exposures between 200 and 350 °C and Co for exposures between 350 and 425 °C.

Table 2 provides an overview of the resistivity (approximately) of Pt, Pd and Co and sheet resistance values for a 10 nm and a 500 nm thick metal layer.

| Metal | resistivity [Ohms.cm] | Rsheet (10 nm) [Ohms/sq] | Rsheet (500 nm) (Ohms/sq) |
|---|---|---|---|
| Pt | 1.5·10⁻⁵ | 15 | 0.3 |
| Pd | 1.5·10⁻⁵ | 15 | 0.3 |
| Co | 3.0·10⁻⁵ | 30 | 0.6 |

More in general, typical the resistivity of silicide-metal forming vary between 1.0·10⁻⁶ and 5.0·10⁻⁶ Ohms.cm (see e.g. Mururka, "Silicides for VLSI applications", Academic Press, NY, 1983, p. 34), which would lead to a variation in the sheet resistance between 0.1 Ohms/square for a 500 nm thick metal layer of the lowest resistivity and 100 Ohms/square for a 10 nm thick metal layer of the highest resistivity. Table 3 provides the (relative) change (i.e. increase or descrease) in the measured sheet resistance Rsh when a metal layer (or a certain silicide phase) is completely transformed in to a (or another silicide) silicide phase:

| Metal | Metal-silicide | Change in Rsh |
|---|---|---|
| Pd | Pd2Si | (+) 1.5 - 2.0 |
| Pt | Pt2Si | (-) 0.6 - 0.7 |
| Pt2Si | PtSi | (+) 1.4 - 1.7 |
| Pt | PtSi | ~ 1 (no difference measured) |
| Co | Co2Si | (+) 5.0 - 5.5 |
| Co2Si | CoSi | (-) 0.05 - 0.1 |
| Co | CoSi | (-) 0.25 - 0.5 |

Table 3 shows that for Pd and Co the resistance increased upon formation of the silicide while for Pt the resistance upon formation of the silicide decreases. In more general, the resistivity of silicides may vary between 1.0·10⁻⁵ and 5.0·10⁻⁴ Ohms.cm (see e.g. Mururka, "Silicides for VLSI applications", Academic Press, NY, 1983, p. 30-33)

A possible response of such sensor array according one embodiment is also depicted in **Fig. 4****.** In particular, **Fig. 4** depicts three thermal events **404,406,408** at times t1,t2 and t3 wherein the temperature during a thermal event may vary. In this case, thermal events t1 **404** and t3 **408** relate to a thermal exposure above the silicidation temperature T1 of the Pd sensor but below the silicidation temperature of the Pt and Co sensors. These events may increase the resistance of the Pd sensor (line **420)** with a predetermined value **424,428** in accordance with the event temperature and the exposure time while the resistance of the Pt and Co sensors is not affected by these thermal exposures.

Thermal event **406** however has a higher event temperature, e.g. around the silicidation temperature of the Pt sensor (approx. 200 °C). In that case, this thermal event may cause a faster silicidation process in the Pd sensors than the other thermal events of lower temperature and a moderate resistance decrease in the Pt sensor as the thermal exposure associated with this thermal event is around the silicidation temperature of Pt wherein Pt is changed into its first stable phase Pt2Si. Hence, during the thermal events the resistance of the sensors may increase or decrease depending on the temperature exposure.

By measuring the resistances of the sensors, information regarding the thermal events may be obtained. For example, after the three thermal events of a predetermined length as depicted in **Fig. 4****,** one may determine on the basis of the sensor resistances that the array was exposed to thermal events between 200 and 350°C and 100 and 250°C. Hence, using sensor arrays as described with reference to **Fig. 4****,** thermal exposure information may be obtained in a simple way. At a predetermined time, the sensor array may be read-out and the measured values may be compared with predetermined reference values in order to provide an estimate of the thermal budget, i.e. the amount of thermal radiation received by the sensor within a certain period, and an estimate of the temperatures the sensor was exposed to.

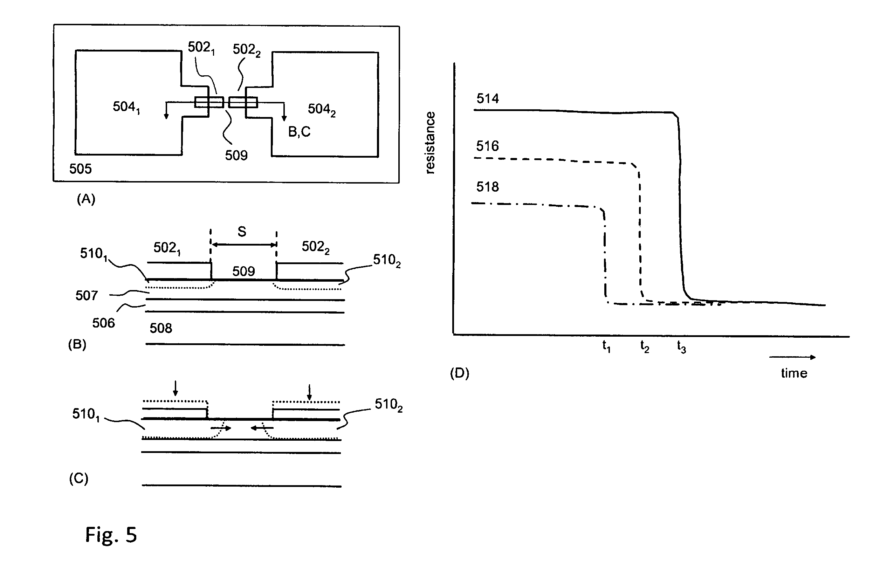

**Fig. 5** depicts a sensor according to a further embodiment of the invention. In particular, **Fig. 5** depicts a top-view (A) and cross-sectional views (B) and (C) of a sensor comprising a thin-film metal structure **502₁,502₂** connected to contact pads **504₁,504₂** on top of a support substrate **505** comprising a groupIV semiconductor. Cross-section view (B) depicts a situation wherein the sensor is just exposed to a silicidation temperature associated with the metal of the metal structures. Cross-section view (C) depicts a situation wherein the sensor is exposed to a silicidiation temperature for a certain time.

The metal structure may comprise in one embodiment a metal strip having a gap **509** of particular dimensions. The cross-section view (B) in **Fig. 5** provides a more detailed view on the gap-section of the sensor according to one embodiment of the invention. The gap separates the two metal electrodes **502₁,502₂** wherein the gap dimensions, in particular the separation between the electrodes S, is selected such that when the sensor is exposed to a certain reaction temperature, the metal will start reacting with the semiconducting layer forming regions **510₁,510₂** of a metal-semiconductor compound in the semiconducting region at the metal-semiconducting interface.

In one embodiment, the support substrate may relate to a bulk silicon substrate (not shown). In another embodiment, a thin insulating layer, typically an oxide layer, may separate a semiconductor layer **507** comprising a groupIV semiconductor from a support substrate **508.** The oxide layer **506** may relate to SiO2 layer of a thickness between 100 nm and 10 µm which may be grown onto a silicon substrate. Alternatively, the oxide may be part of a Silicon-on-Insulator (SOI) structure wherein the oxide may have a thickness of about 100 nm to 4 µm. Exposed parts of the semiconducting layer may be covered using a passivation layer (not shown), e.g. a silicon oxide or a silicon nitride layer of a thickness between 25 and 250 nm, for chemically and electrically passivating the parts which are not covered by the metal structure.

As will be described hereunder in more detail, the insulating layer may be used to confine the silicidation process to a certain area. This way, the silicidation region, i.e. the sensing region, can be more precisely controlled. In that case, the semiconductor layer may be selected to be relatively thin, e.g. in the range between 20 and 500 nm, so that when the formation of the silicide region is stopped by the underlying insulating layer, the silicide region may extend further in lateral direction.

This situation is depicted in cross-sectional view (C). In order to achieve such lateral formation the thickness of the metal layer is between 20-500 nm and at least larger than the thickness of semiconductor layer. This way the metal-semiconducting compound regions **510₁,510₂** will laterally move towards each other when exposed sufficiently long to temperatures above temperature above the reaction temperature of the metal-semiconductor compound formation process. Typically gap separations between approx. 0,1 and 10 µm may be selected.

When exposed to a certain temperature above the reaction temperature of the metal-semiconductor compound formation process (e.g. the silicidation temperature), the metal-semiconductor compound regions will grow towards each other and eventually meet so that resistance of the sensor will change from a first resistance dominated by the resistivity of the semiconductor in the gap region into a second resistance dominated by the resistivity of the metal-semiconductor compound formed in the gap. When using undoped poly silicon support substrates, the resistivity of the gap region may be approx. 2.3.10⁵ Ohms.cm (i.e. the resistivity of intrinsic monocrystalline silicon) providing typical sheet resistances between 5.10⁹ and 1.10¹¹ Ohms/square. Using a standard doped silicon bulk substrate or semiconductor layer (approx. 10¹⁵ atoms.cm⁻³) the resistivity may vary between 1 and 10 Ohms.cm providing typical sheet resistances between 2.10⁴ and 5.10⁶ Ohms/square.

Typically for larger gap values S the initial resistance of the sensor will be higher and for the same temperature exposure it will take longer before a complete metal-semiconductor compound region is formed within the gap. This situation is depicted in the resistance versus time plot of **Fig. 5** (D), which comprises several responses **514-518** for different gap widths. The larger the width of the gap, the longer it takes to fully transform the semiconductor gap region in a metal-semiconductor compound region.

Such sensor layout may be used in a similar ways as described with reference **Fig. 1-4****.** Thermal events associated with a certain predetermined temperature exposure above the reaction temperature of the metal-semiconductor compound formation process may cause the gap region to be transformed in a number of sequential exposures into a relatively low-resistance metal-semiconductor compound (when compared with the high-resistive silicon path before thermal exposure). The larger the gap width the longer it will take before the gap area is transformed into a metal-semiconductor compound. This way, a thermal finger print arrays comprising a plurality, e.g. two or more, of sensors with varying gap width and/or different metals may be realized.

It is submitted that other more complex gap structures may also be used without departing from the invention. For example, the gap structure may have an interdigitated or semi-circular shape. Moreover, instead of measuring the resistance of a sensor, in some embodiments the capacitance may be measured. In that case for example, the silicon layer may comprise high-resistive intrinsic silicon. During the silicidation process, the effective gap between the two electrodes will become smaller thus increasing the capacitance of the gap structure.

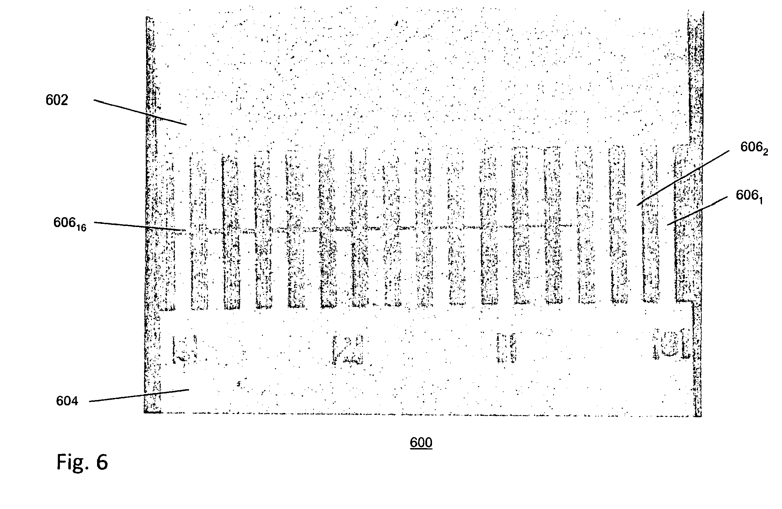

**Fig. 6** illustrates a further embodiment of a sensor according to the invention. In particular, **Fig. 6** depicts a sensor comprising a first and second contact (bonding) pads **602,604** for electrical contact. A plurality of thin-film electrodes **606₁₋₁₆,** in this example 16 equally spaced parallel thin-film Pd lines of 10 µm width, are disposed between the first and second contact pads. The layout of the sensor is such that an outer electrode **606₁** is designed as a continuous thin-film line electrically connecting the first and second contact pads while the other electrodes **606₂₋₁₆** are provided with a gap (similar to the sensor layout described with reference to **Fig. 5****).**

In the sensor of **Fig. 6****,** the gap spacing S of the subsequent lines was designed to increase in steps of 0.2 µm from 0.2 µm (line **606₂)** to 3.0 µm (line **606₁₆).** Due to limitations in both mask writing and lithography the lines associated with the two smallest gaps (0.2 and 0.4 µm) were short-circuited thus effectively behaving as a continuous line electrode. The 200 nm thick Pd metal structure was fabricated on a bulk silicon substrate comprising a 1 µm thick SiO2 layer and a 70 nm poly-Si layer.

Upon exposing the sensor to a temperature above the silicidation temperature, the metal will start reacting with the silicon thereby forming a silicide region with the underlying silicon. After complete consumption of the silicon layer directly underneath the electrodes, the silicide fronts will continue to expand in horizontal direction beyond the original borders of the deposited metal structure in a similar way as described with reference to **Fig. 5****.**

Assuming a substantially constant temperature exposure, the lateral extension of the silicide fronts will depend on the time of exposure. This way, when exposing the sensor for a period of time to a certain temperature, a predetermined number of gaps will be short-circuited by the silicide fronts.

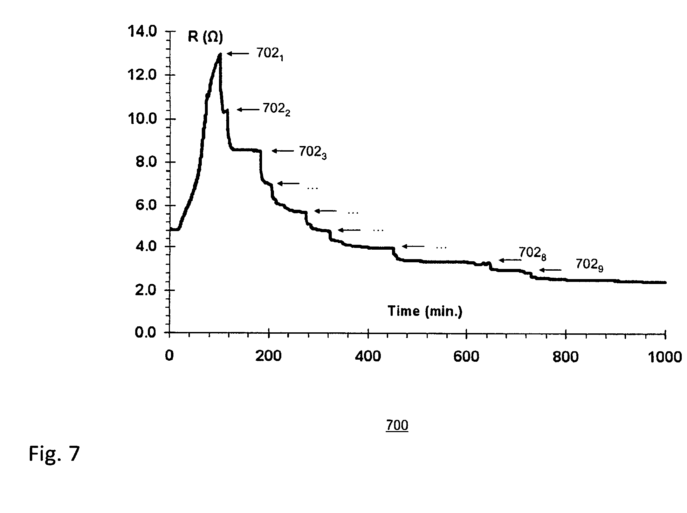

Upon each closing of a gap an extra conducting line is formed in parallel next to the already short-circuited lines leading to a discrete resistance drop for each additionally closed gap. The resistance-time response **700** of a sensor is depicted in **Fig. 7****.** Upon exposure, the sensor first exhibits an increase in the resistance **702₁,** which coincides with the formation of a more resistive Pd2Si layer on cost of the low resistive Pd layer. After consumption of the silicon underneath the metal lines lateral silicidation takes place. The lateral silicidation will not contribute significantly to the overall resistance increase of the sensor, as it will typically proceed at a much lower rate than the vertical growth. At a certain time the first gap with smallest spacing S will be short-circuited leading to a resistance drop **702₂**. For prolonged times at elevated temperature this process will continue and consecutive gaps with increased spacings will also close (indicated with the arrows **702₁₋₉** in **Fig. 7****).** Since all lines are in parallel each extra closed line will contribute less and less to the resulting resistance which is in accordance with the observations in **Fig. 7****.**

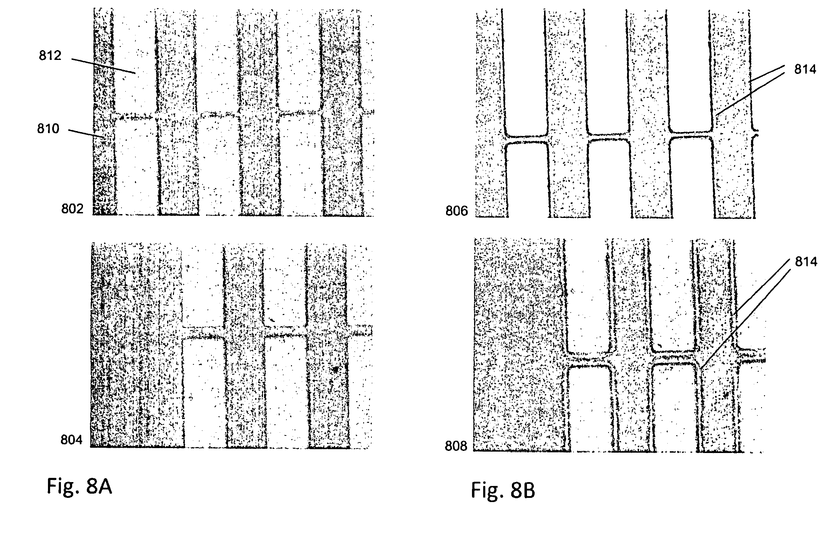

The lateral silicide growth due to confined silicidation is depicted in more detail in **Fig. 8A** showing part of a sensor structure comprising narrow gap spacings (photo 802) and a wide gap spacings (photo **804)** before thermal exposure. Here, the dark area **810** relates to the silicon substrate and the light area **812** relates to the metal sensor structure. **Fig. 8B** shows photo's **806, 808** of the same structures after thermal exposure. In this figure, the lateral silicide fronts **814** of approximately 1 µm width surrounding the original metal structures are clearly visible. These fronts are large enough to close all gaps of two µm or less.

A sensor as described with reference to **Fig. 6** and **7** may be used as a discrete temperature sensor, wherein the actual measured resistance provides a measure for the total number of closed gaps which provide an indication for the time (at constant temperature) or temperature (at constant time). Since the formation of each metal silicide takes place at a given temperature window one may design sensors covering a large temperature window (e.g. 100°C - 450°C) by selecting the proper metals.

**Fig. 9** depicts a schematic of a process **900** for manufacturing a sensor or a sensor array according to one embodiment of the invention. In a first step (a) a support substrate **902** may be cleaned. The support substrate may comprise a type IV semiconductor. Alternatively, in one embodiment, a group IV semiconductor layer is deposited or grown onto the substrate (not shown) using a suitable deposition process, e.g. LPCVD or sputtering. The thickness of such thin-film semiconductor layer may be between 20 nm and 5 nm, preferably between 50 nm and 250 nm. In some embodiments, an insulating oxide layer, e.g. SiO2 layer or the like, may be formed before depositing the semiconductor layer. In yet other embodiments a Silicon-On-Insulator (SOI) type thin-film structure may be used (not shown).

In a second step (b) a SiO2 oxide layer **904** is grown over the front and back of the substrate. The thickness of the oxide layer may be between 25 nm and 250 nm. A subsequent photolithography step (c) is used for transferring the desired layout of the sensor into a photo-resist **906** by exposing parts of the photo-resist to radiation **910** through a mask **908** and opening the exposed parts using a development step. Thereafter, in a fourth step (d) the oxide at the exposed parts in the resist is etched in order to expose the underlying semiconductor support substrate or semiconductor layer. A standard isotropic SiO2 wet-etch may be used so that an under etch **912** is formed enabling easy liftoff of the mask. In the fifth step (e) a 20-500 nm (continuous??) thick metal layer **916** is deposited using a low temperature deposition technique such as sputtering. The metal layer may form the thin-film metal structure **914** of the sensor which is in direct contact with the underlying group IV semiconductor. The metal layer may also be used to form the bonding pads for electrically connecting the small metal layer structure. Alternatively, the large bonding pads may be fabricated in a separate fabrication step.

After lift off (f) the substrate (wafer) may be diced. Hence, the resulting sensor structure comprises a metal layer in direct contact with a group IV semiconductor so that after thermal exposure above a certain temperature the metal may react with the semiconductor into a metal-semiconductor compound. The parts of the substrate not covered by the pads and the thin-film structure are covered by the oxide layer thereby functioning as a protective layer preventing the semiconductor layer from reacting with impurities from its surroundings when thermally exposed.

In a further embodiment, the resulting structure may be covered with a passivation layer such as a Si3N4 layer in order to protect the metal layer from reacting with impurities. When using (near) noble metals such as Pd or Pt such passivation layer may not be necessary.

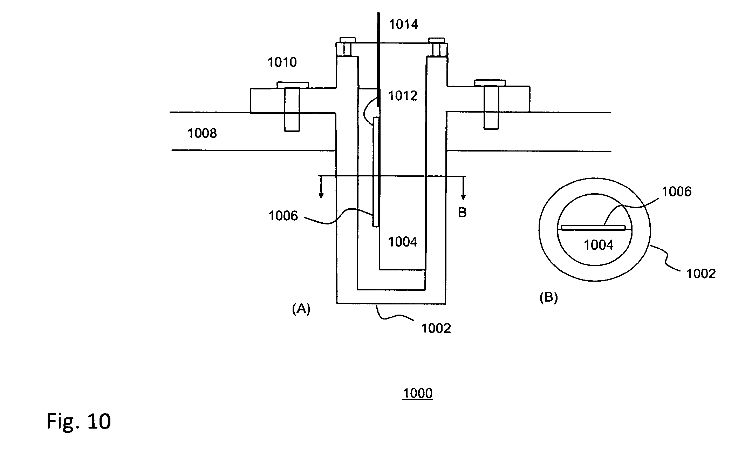

**Fig. 10** depicts a schematic of a sensor module according to one embodiment of the invention. The sensor module may comprise housing part **1002** and a sensor mounting part **1004** which are configured for efficiently mounting and thermally fixing a thermal sensor **1006** according to the invention to a machine part **1008** (e.g. a ball bearing support structure, an element of a turbine, the housing of a brake system in a train or a plane, etc.). The module may be fabricated from a suitable thermally conductive metal, e.g. copper, and may be removably attached to the object requiring thermal exposure monitoring. The housing may be removably attached to the object by screws **1010** or a threaded portion which fits into a threaded bore portion of an object. The support substrate may be thermally fixed to the mounting part using an adhesive having an acceptable thermal conductivity. Such adhesives are well known in the field of electronic packaging. Further, the mounting part may be removably mounted into the housing part, so that a sensor may be replaced.

The housing may be further provided with one or more output terminals **1014,** which may be connected via bonding wiring **1012** to the thermal sensor and, optionally, read-out electronics associated with the thermal sensor. A sensor module may also be formed using other housings, e.g. an IC package configured for providing a good thermal contact with the object to be monitored.

It is to be understood that any feature described in relation to any one embodiment may be used alone, or in combination with other features described, and may also be used in combination with one or more features of any other of the embodiments, or any combination of any other of the embodiments. Moreover, the invention is not limited to the embodiments described above, which may be varied within the scope of the accompanying claims.

## Claims

1. Thermal history sensor comprising:
a support substrate comprising a group IV semiconductor;
at least first metal structure connected to at least a first and second contact pad, at least part of said first metal structure being in contact with said group IV semiconductor,
wherein said metal is selected such that it reacts with said group IV semiconductor to a metal-compound semiconductor region when exposing said sensor to temperatures around or above a predetermined reaction temperature associated with the formation of said metal-compound semiconductor and wherein a first electrical response of said exposed first metal structure provides information on at least a first part of said thermal exposure.

2. Thermal history sensor according to claim 1 further comprising:
at least a second metal structure connected to at least a second pair of contact pads, at least part of said second metal structures being in contact with said group IV semiconductor,
wherein said second metal is selected such that it reacts with said group IV semiconductor to a metal-compound semiconductor region when exposing said sensor to temperatures around or above a second predetermined temperature and wherein a second electrical response of said second metal structure provides information on at least a second part of said thermal exposure of said sensor.

3. Sensor according to claims 1 or 2, wherein said first metal structure comprises at least one metal selected from the noble, near-noble, rare earth metals, the refractory metals or alloys therefrom.

4. Sensor according to any claims 1-3, wherein said first metal structure comprises at least one thin-film layer, preferably said thin-film metal layer having a thickness between 10 and 500 nm, preferably between 10 and 200 nm.

5. Sensor according to any of claims 1-4, wherein said group IV semiconductor comprises diamond, silicon or germanium and/or compounds thereof.

6. Sensor according to any of claims 1-5, wherein said group IV semiconductor is disposed in at least one thin-film semiconductor layer over said support substrate, preferably said thin-film semiconductor layer having a thickness between 20 and 500 nm, more preferably between 50 and 250 nm.

7. Sensor according to claim 6, wherein at least one insulating layer is disposed between said thin-film semiconductor layer and said support layer, preferably the thickness of said group IV semiconductor thin-film layer being smaller than the thickness of said first metal structure.

8. Sensor according to any of claims 1-7, wherein said first metal structure comprises one or more continuous thin-film metal conductors electrically connecting said first and second contact pad and wherein an electrical response measured between said first and second pad changes when said device is exposed to a temperature around or above a predetermined reaction temperature associated with the formation of said metal-compound semiconductor.

9. Sensor according to any of claims 1-7, wherein said first metal structure comprises at least a first thin-film metal conductor connected to said first contact pad and at least a second thin-film metal conductor connected to said second contact pad, said first and second conductor being separated by a gap structure and wherein the dimensions of said gap structure being selected such that the an electrical response measured between said first and second pad changes when said device is exposed to a temperature around or above a predetermined reaction temperature associated with the formation of said metal-compound semiconductor.

10. Sensor according to any of claims 1-9, wherein said electrical response is based on the resistive response and/or the capacitive response of said sensor.

11. Sensor according to any of claims 1-10 further comprising:
thin-film passivation layer, preferably a silicon oxide passivation layer, covering at least areas of said support substrate which are not covered by said metal structure.

12. Sensor according to any of claims 1-10, wherein said support substrate is part of an integrated circuit, a solar panel, a display or an imaging sensor.

13. A sensor module for monitoring the thermal exposure of an object comprising a thermal history sensor according to any of claims 1-11, wherein said module comprises a protective housing and a thermal mount for establishing a thermal contact between said object and said sensor.

14. Sensor module according to claim 12, wherein said housing is configured to be removably connected to said object.
